# EUROPEAN PATENT SPECIFICATION

(11) **EP 0 559 488 B1**
(45) Date of publication and mention of the grant of the patent: **19.08.1998**
(21) Application number: 93301686.7
(22) Date of filing: 05.03.1993
(51) Int. Cl.: G06F 11/00, G06F 11/10, G06F 11/14

(54) **Handling data in a system having a processor for controlling access to a plurality of data storage disks**
Datenbehandlung in einem System mit einem Prozessor zur Steuerung des Zugangs zu einer Mehrzahl von Datenspeicherplatten
Manipulation de données dans un système à processeur pour commander l'accès à une pluralité de disques de stockage de données

(30) Priority: 06.03.1992 US 847639; 10.03.1992 US 851288
(43) Date of publication of application: 08.09.1993
(73) Proprietor: DATA GENERAL CORPORATION, Westboro Massachusetts 01581 (US)
(72) Inventor: Solomon, Robert C., Kensington, New Hampshire 03827 (US); Todd, Stephen J., Shrewsbury, Massachusetts 01543 (US); Pendleton, Samuel S., Boulder, Colorado 80301 (US); Lippit, Mark C., Boulder, CO 80303 (US)
(74) Representative: Abnett, Richard Charles

(56) References cited:
- EP-A- 0 434 532
- WO-A-91/13405
- US-A- 4 761 785
- PROCEEDINGS OF THE 16TH VLDB CONFERENCE, 13 August 1990, BRISBANE, AUSTRALIA pages 148 - 161 J. GRAY ET AL. 'Parity Striping of Disc Arrays: Low-Cost Reliable Storage with Acceptable Throughput'
- FAULT-TOLERANT COMPUTING SYMPOSIUM, 6 July 1987, PITTSBURGH, PENNSYLVANIA, USA pages 176 - 181 Y. DISHON ET AL. 'A Highly Available Storage System Using the Checksum Method'

## Description

This invention relates to a machine method of handling data in a system having a processor for controlling access to a plurality of data storage disks, and to data processing apparatus for use in the method.

More particularly, the invention is concerned with high availability disk arrays for use in data processing systems and to improved techniques for handling various types of power failure conditions that may occur during operation of such systems.

A particular disk array system which provides a high degree of availability of the disks thereof has recently been developed, which system is often referred to as a Redundant Array of Inexpensive Disks (RAID). A specific implementation thereof is often referred as a Level 5 array, i.e., a RAID-5 disk array, which implementation is described in the article, "A Case For Redundant Arrays of Inexpensive Disks (RAID), David A. Patterson et al., Dep., of Electrical Engineering and Computer Sciences, University of California, Berkeley, California. Such system uses an intelligent input/output (I/O) processor for accessing one or more disk modules of the array in response to the needs of a host computer, each disk module of the array being driven by disk drive circuitry operating via the I/O control processor in a manner that effectively appears to the host computer as a single disk drive. A disk module comprises, for example, a disk, disk driver circuitry, and power/control circuitry. Alternatively, in some implementations of such systems, an I/O processor need not be used and the host computer may communicate directly with the disk modules which form an array.

In a particular RAID-5 context, for example, which comprises an array of five disk modules, each disk has a plurality of "N" data storage sectors, corresponding sectors in each of the five disks being usually referred to as a "stripe" of sectors. With respect to any stripe, 80% of the sector regions in the stripe (i.e., in a 5 disk array effectively 4 out of 5 sectors) is used for user data and 20% thereof (i.e., effectively 1 out of 5 sectors) is used for redundant, or parity, data. The use of such redundancy allows for the reconstruction of user data in the event of a failure of a user data sector in the stripe.

When a user data disk module fails, the redundant or parity entry that is available in the parity sector of a stripe and the data in the non-failed user data sectors of the stripe can be used to permit the user data that was in the sector of the failed disk to be effectively reconstructed so that the system can remain operative using such reconstructed data even when the user data of that sector of the failed disk cannot be accessed. The system is then said to be operating in a "degraded" mode since extra processing operations and, accordingly, extra time is required to reconstruct the data in the failed disk sector when access thereto is required.

Certain kinds of failures, however, can occur in which the array is left in an incoherent or effectively unusable state, e.g., a situation can occur in which there is power failure, i.e., power to the I/O processor (IOP) fails or the I/O processor itself fails due to a hardware defect, or power to the disk drives themselves fails. A further problem can arise, for example, if a power failure results in the need to use a new IOP to replace a failed one and there is no way to identify where a write operation to a sector of the array was taking place after the new IOP has replaced the old IOP.

International Patent Application Publication No. WO91/13405 describes a method of detecting and correcting data errors that may arise in a mass data storage apparatus which comprises a set of physical mass storage devices operating together. On restoration of power, a determination is made as to whether or not a write operation was interrupted when power was removed, and any inconsistent data is reconstructed. This is achieved by storing in non-volatile memory a time stamp entry for each data block stored, and, if a power failure occurs, the actual time stamp for each data block is compared with the time stamp for that block which is held in the non-volatile memory. If errors are detected, the data blocks with the oldest time stamps are reconstructed by error correction circuitry to bring them up to date. This method requires storage of and reliance upon time stamps associated with each data block written to the storage apparatus.

The invention is defined in the independent claims appended to this description to which reference should now be made. Advantageous features of the invention are set forth in the appendant claims.

A preferred example of the invention will now be described in more detail by way of example with the help of the accompanying drawings wherein:
FIGS. 1-3 show diagrammatic views of sectors of a stripe in a group of disk modules for various exemplary data/parity situations;
FIG. 4 shows a block diagram of a disk module system embodying the invention;
FIG. 5 shows a flow chart for various data write situations;
FIG. 6 shows a flow chart for various data read situations;
FIG. 7 shows a flow chart for opening an array of disk modules;
FIG. 8 shows a flow chart for a backgound/verify operation; and
FIG. 9 shows a flow chart for the reconstruction of data in a failed disk.

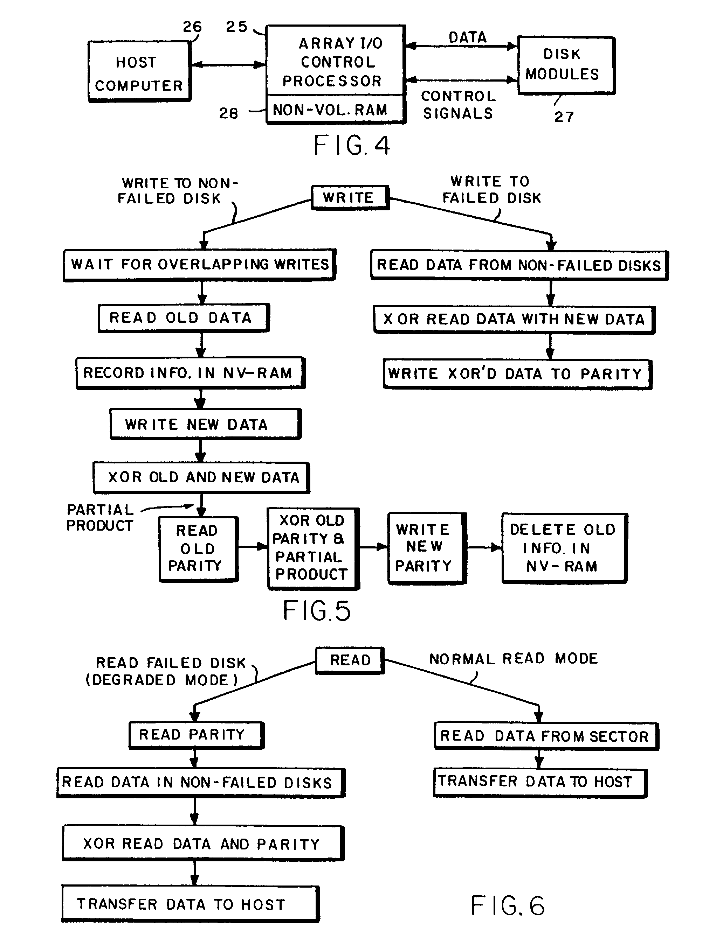

FIG. 4 depicts a block diagram of a system in which the invention can be embodied. As seen therein, an array I/O control processor 25 communicates with a host computer and with a plurality of disk modules 27. The I/O control processor 25 includes a non-volatile random-access-memory (RAM) as discussed in more detail below. The control processor controls the write/read operations of the disk modules as well as the operations for opening up an array of disk modules for use in the system and for reconstructing data in a failed disk of the system, as discussed in more detail below. A system may utilize a single I/O processor for controlling an overall multiple array sub-system, or each disk array may have its own corresponding processor associated with it.

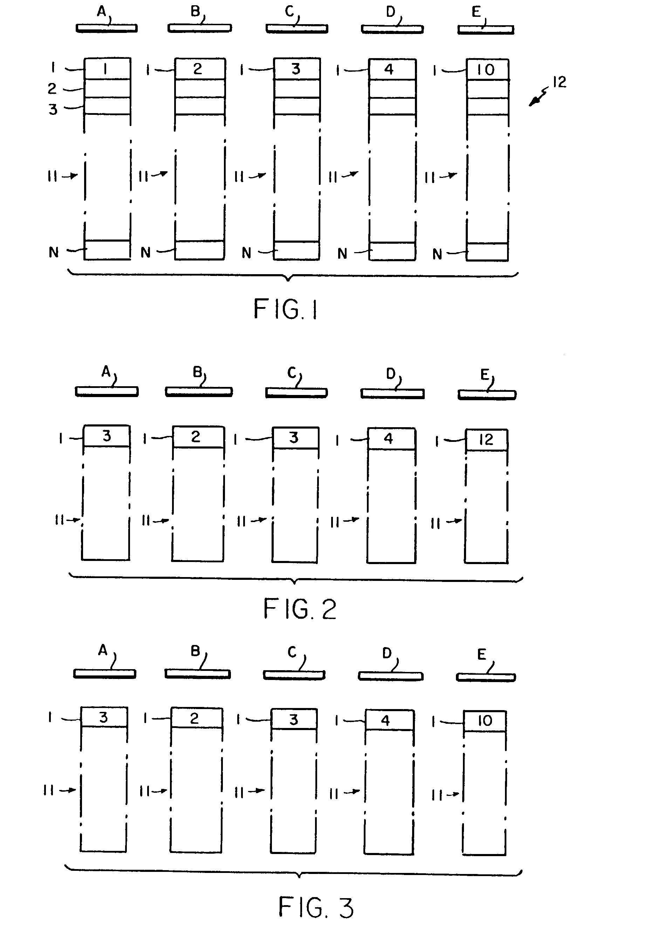

The invention can be better understood by reviewing briefly the concept of a basic RAID system and the use therein of a redundant, or parity, operation, as discussed with reference to FIG. 1. For simplicity in understanding such concept, rather than using complicated digital encoding to describe data stored in the disks of an array, the following discussion represents such data merely by integers, it being realized that such integers are in reality digitally encoded words. The array in FIG. 1, for example, represents an array 10 comprising five disks, the disks being represented by disk units A, B, C, D and E, each having a plurality disk storage sectors 11 used to store data in each disk, exemplary sectors 1, 2, 3,... N on each disk being specifically shown diagrammatically in FIG. 1.
Corresponding groups of sectors 1 through N on each disk of the five disks, as shown in FIG. 1, represent a stripe 12 of the five disk array depicted. Other corresponding groups of sectors on each disk (not shown) of the type shown in FIG. 1 can represent other stripes of the five disk array.

The disk array, as shown in FIG. 1, may be part of a much larger overall multiple array sub-system which includes other disk arrays. For example, a typical multiple array sub-system may utilize six arrays, each being of the type having five disks as shown in FIG. 1, thereby providing a 30-disk multiple array sub-system, the entire sub-system being appropriately connected to one or more I/O processors for providing access to each of the disks of the multiple array via suitable multiple buses (e.g., via well-known "Small Computer System Interface," or "SCSI," buses), as well as other control buses, as would be known to the art. For simplicity in understanding the invention, a description thereof with reference only to a single stripe of a single array, as in FIG. 1, is provided, it being understood that the same operation occurs with reference to each of the other stripes of the array.

In stripe 12 of FIG. 1, with reference to sector 1 of each of disks A, B, C, D and E, if it is assumed that user data in sector 1 of disks A, B, C, and D, is represented by integers 1, 2, 3 and 4, respectively, the entry in corresponding sector 1 of disk E (used as the "parity" disk for that stripe) is the sum of the data in the user data sectors, i.e., 1+2+3+4 = 10. Data in any one of the sectors, e.g., a sector of a disk that has failed, can be reconstructed by subtracting the data in the other corresponding non-failed sectors of non-failed disks from the parity entry in the parity sector. Thus, assuming a failed disk C, if it is desired to reconstruct the data "3" in sector 1 of failed disk C, for example, such reconstruction can accordingly be made by such subtraction process, e.g., 10-1-2-4 = 3.

A problem can arise if a power failure described above occurs, e.g., a power failure to the IOP, a hardware failure in the IOP, or a power failure to the disks, after new data has been written into a particular sector of a particular disk, but before the new parity entry can be written into the parity sector. For example, as described with reference to FIG. 2, if new data 3 is written into sector 1 of disk A, a new parity entry should be entered in disk E, namely 3+2+3+4 = 12. Such new parity data is normally written as follows. The old data (e.g. "1") in sector 1 of disk A is read and the difference between the new data and the old data in sector 1 of disk A is determined, i.e., 3-1 = 2. The new data "3" is then written into sector 1 of disk A. The old parity 10 in sector 1 of disk E is read and is added to the above-determined difference data "2" to obtain a new parity entry "12" which is then written into the parity sector 1 of the disk E.

Alternatively, parity can be determined and the parity entered first in the parity disk before the new data is written into the user data disk, or, as a further alternative, the new data and the new parity can be entered substantially simultaneously.

However, if a failure as mentioned above occurs before the new parity entry "12" is written into sector 1 of disk E but after the new data "3" is written into sector 1 of disk A, the data in the sectors 1 of the disks will be as shown in FIG. 3 wherein the old parity 10 remains in sector 1 of disk E while new data 3 is in sector 1 of disk A. Under such conditions, if an attempt is made to reconstruct the data in a failed disk C of the stripe, the reconstructed data will be incorrect (i.e., the reconstructed data (10-3-2-4) will be "1" rather than the correct data "3".

In order to avoid an incorrect reconstruction of data on the failed disk, a non-volatile RAM 28, shown in FIG. 4, is used in the I/O control processor. In accordance with the invention, each time new data is to be written into a sector of a particular disk, the I/O processor stores the following information, concerning the location where the new data is to be written, into the non-volatile RAM (NV-RAM).
1. The particular array of a multiple array system into which the new data is to be written.
2. The particular starting sector in the array in which the new data is to be written. For example, sector 1 of disk A.
3. The number of sectors which are being written into. For example, the data may be written into only one sector.

If multiple I/O processors are used, each processor being associated with a different array of disk modules, each I/O processor will normally use its non-volatile RAM to store information only with respect to its own array.

Where an array is powered up after a failure has occurred and the array has recovered therefrom, before using the data in the array depicted in FIG. 1, the IOP must make sure that there is no discrepancy between the user data in corresponding sectors in each of the disks A, B, C and D of the array and the parity entry in the corresponding parity sector on disk E. That is, the system must determine that the parity correctly matches the current user data in the other corresponding user data sectors. In order to make such determination, the I/O processor scans the NV-RAM to determine where write operations were in progress when the power failure occurred, e.g., the IOP identifies the array, the starting sectors and the number of sectors thereof where write operations were in progress. Then, depending on the data which is currently in the sectors where a write was in progress, the corresponding parity sectors are determined. Thus, if a write was in progress in sector 1 of disk A and the user data in sector 1 of disk A is still the old data "1", the parity is determined as 1+2+3+4 = 10. However, if the user data in sector 1 of disk A has been changed to new data 3, the parity is determined as 3+2+3+4 = 12. However, if the actual parity in sector 1 of disk E is still "10" the IOP knows that a mismatch exists. The IOP then changes the parity entry in parity sector 1 of disk E to "12" so that it now matches the actual user data in the user data sectors 1 of disk A, B, C and D.

Accordingly, because the write-in-progress location has been correctly identified in the NV-RAM, the parity and the user data of corresponding sectors can always be matched so that it can be assured that the reconstructed data in a sector of a failed disk will always be consistent with the data that is actually present in the corresponding sectors of the other non-failed disks and with the parity entry in the corresponding parity sector. By such operation, since there will always be a match between the actual user data and the parity in corresponding sectors of a stripe, the I/O processor can be assured, when such match is checked, that data that is reconstructed from the user sector data and parity entry of the non-failed disks correctly represent the data of the failed disk.

In another situation where a new I/O control processor is put into place in the system, that is, either an old I/O control processor is defective or, for some other reason, an old I/O control processor has had to be replaced, or, in multiple I/O processor system, one of the I/O processors servicing another disk array is requested to service the array previously serviced by the failed processor, the new control processor no longer has the above desired information in its NV-RAM (such NV-RAM is effectively blank) so that it is not possible to bring about a matching of the user data and parity in all of the sectors of the array in which data has been changed since it is not possible to locate where a new write operation was in progress when failure occurred. In such a situation, a further technique, referred to herein as a "background/verify" operation, is used.

In accordance with such background/verify operation, the host computer continues to perform whatever operations with which it is involved, while the new I/O control processor, when it is not required for such operations, successively reads user data and the corresponding parity in each sector of each disk of the array. In doing so, the new I/O control processor checks each parity entry in each sector and matches the parity entry in each parity sector to whatever user data is actually present in each of the corresponding user sectors. If, during such parity verification process, the new control processor finds that a parity mismatch exists, it corrects the parity entry by using the user data actually found in each corresponding user data sector, even though the control processor is unable to determine what caused the mismatch, i.e., whether the user data in one or more of the user sectors is incorrect or whether the parity entry in the corresponding parity sector is incorrect. The verification obtained by performing such user data/parity matching operation for corresponding sectors is made in between other operations which must be performed by the I/O control processor under command of the host computer (i.e., in the "background" with respect to such other operations), such verification operation by the I/O control processor being effectively invisible to the host computer. Thus, when the verification process is completed, there is an assurance that there are no inconsistencies between the user data stored in each sector and the parity entry in the corresponding parity sector associated with such user data.

Specific implementations of read and write operations which can make use of the non-volatile RAM and the background/verify technique are discussed with reference to the flow charts of FIGS. 5-9. Specific programs can be readily created for use by the IOP from such flow charts by those of skill in the art using what is disclosed therein. Such specific programs can be devised for use in any particular I/O processor or host computer system and the creation thereof would be well within the skill of the art from a knowledge of what is disclosed in FIGS. 5-9.

As can be seen in FIG. 5, for example, a write operation into a sector of an array can occur under a first condition wherein a write is to be made to a non-failed disk of an array, in a non-degraded or a degraded mode, and a second condition wherein a write is to be made to a failed disk of an array in a degraded mode.

As can be seen in FIG. 5, in the first condition write mode the IOP waits for overlapping write operations (i.e., other write operations which are concurrently being performed on the same sectors but which are not yet completed) to be completed. Once such concurrent write operations finish, the IOP reads the data currently in the sectors where the new data is to be written (the "old" data) and appropriately records the desired information, as discussed above with respect thereto in the NV-RAM, i.e., information identifying, for such write operation, the array, the starting sector, and the total number of sectors where write operations are to be performed.

For each sector the new data is then written into the desired sector and the old data and new data are XOR'ed to create a partial product. The old parity is read and is then XOR'ed with the partial product to create a new parity. The new parity entry is then written into the parity sector and the information in the NV-RAM with respect to the old data is deleted.

In writing to a failed disk, i.e., in a degraded mode, the data in all of the non-failed disks are read and XOR'ed with the new data (for the failed disk). The XOR'ed data is then written as the parity entry of the parity sector.

As shown in FIG. 6, when data is to be read, it is read either from a non-failed disk in a normal, non-degraded mode or in a degraded mode in which there is a failed disk, where the read is to be from the failed disk. In the normal mode the IOP reads the data directly from the desired sector and transfers such data to the host.

In reading from a failed disk in a degraded mode, the entry in the parity sector of the stripe is read and the data in the other non-failed disks are read. The parity entry is XOR'ed with such other data to re-create the data in the failed disk and such data is transferred to the host.

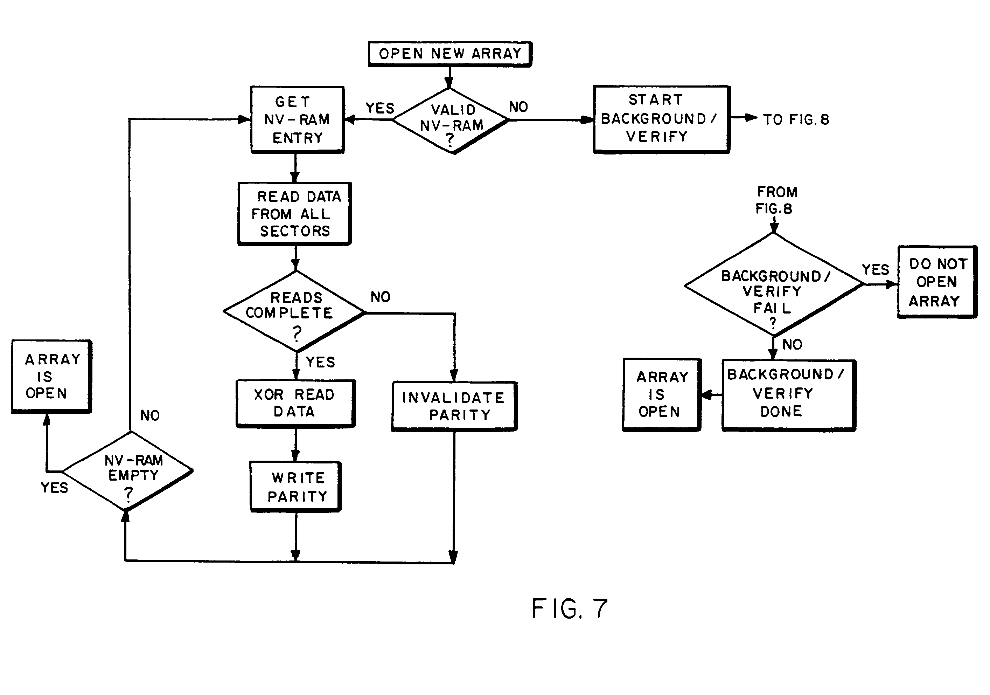

FIG. 7 depicts an operation which is performed when a new array of disks, not previously accessed by the system, is to be accessed by the IOP, or an array has been temporarily not available for access but becomes available therefor, often referred to as "opening" an array. As mentioned above, an IOP utilizes a non-volatile RAM for recording stripe and sector identification information with respect to an array. Each array may have entries in the NV-RAM in the IOP and, when opening an array, it must first be determined whether or not there are already entries in the NV-RAM in the IOP for the particular array being opened.

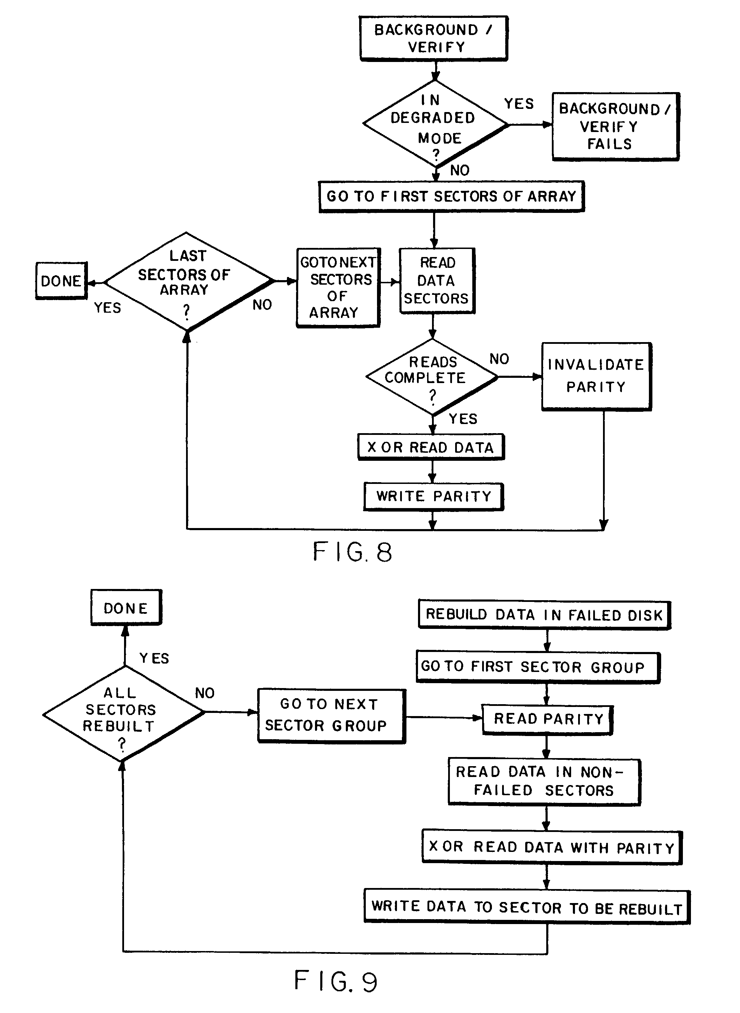

If no valid NV-RAM entries currently exist in the IOP for the array being opened, a background/verify process (see FIG. 8) is initiated by the IOP and if, as discussed below, the new array is not in a degraded mode, the array is opened. If a valid NV-RAM entry is already available in the IOP, the NV-RAM entry for that particular array is obtained and the data from all the user data sectors for that entry are read. When the reads are completed the read data are XOR'ed together to form a parity entry. The parity entry is written into the parity sector and the NV-RAM entry is deleted. The NV-RAM entry for the next sector group (if there is one) is obtained and the process is repeated. Once all NV-RAM entries for this array have been deleted, the array is open.

If, however, the reads in a sector group cannot be completed because the array is in a degraded mode (a sector cannot be read directly on a disk), the parity entry is invalidated for that sector group and nothing further can be done with that NV-RAM entry and the NV-RAM entry is deleted. The process is then repeated for the next NV-RAM entry (if there is one).

The background/verify process mentioned in FIG. 7 is depicted in FIG. 8. The IOP first determines whether or not the array is in a degraded mode. If it is, the background/verify operation fails and the array cannot be opened (see FIG. 7). If the array is not in a degraded mode, the IOP goes to the first sector of each of the disks of an array and reads the data from all user data sectors thereof. If the reads can be completed, the data is XOR'ed together to form a parity entry. The parity is written as the parity entry in the corresponding parity sector. If the corresponding sectors being verified are the final group of corresponding sectors of the array, then the background/verify process is done. If they are not, then the IOP goes to the next group of corresponding sectors and performs the same operations until the background/verify process for the array is done.

If in processing a group of corresponding sectors the reads of the data in the user data sectors cannot be completed, the corresponding parity is invalidated for that sector group and the IOP either goes to the next group of sectors or, if that is the last sector group, the operation is completed for the array. When the background/verify operation is done the array is opened (see FIG. 7).

FIG. 9 depicts an operation for reconstructing, or rebuilding, data in a failed disk. The IOP goes to the first sector group in which a sector of a failed disk is to be reconstructed. The parity entry in that sector group is read, the data in all non-failed sectors of the sector group are read and XOR'ed with the parity entry to provide the reconstructed data. The reconstructed data is then written into the sector of the failed disk which is to be rebuilt. The process is repeated for all data sectors that have to be rebuilt.

Certain features described herein form the subject of our European Patent Application No. 93301685.9 of even date, publication No. EP-A-0 559 487.

## Claims

1. A method for handling data in a system having a control processor for controlling access to an array of data storage disks, wherein storage sectors of a selected number of said disks contain user data and storage sectors of a selected one of said disks contain redundant parity entries which match with the user data entries in the sectors corresponding thereto, corresponding user data and parity sectors in said disks forming identifiable sector groups, wherein said control processor includes a non-volatile, random access-memory (RAM), said method comprising the steps of:
writing new user data into one or more selected sectors of said data storage disks;
when writing said user data, writing into said non-volatile RAM information identifying the array where said new user data is to be written, identifying the starting sector in said array into which new user data is to be written, and identifying the number of said one or more selected sectors into which said new user data is written; and
wherein, if a power failure occurs,
examining the information in the non-volatile RAM identifying data sectors into which new user data has been written;
determining a new parity entry for data in the corresponding data sectors into which new data has been written;
examining a previous parity entry which has been entered for data in the corresponding data sectors into which new data has been written, and
comparing the previous parity entry and the new parity entry, and correcting, if a mismatch occurs in a sector group, the parity entry in the parity sector of said sector group to provide a parity entry therein which correctly matches the user data in the user data sectors of said sector group.

2. A method in accordance with claim 1, and further including the steps of:
determining whether or not said non-volatile RAM contains any information concerning the writing of new user data into any sectors of said disks; and
if said non-volatile RAM contains no such information, verifying whether the parity entry in the parity sector of each sector group matches with the user data in the corresponding user data sectors of the corresponding sector group.

3. A method in accordance with claim 2, and further including, if a mismatch occurs in a sector group, correcting the parity entry in the parity sector of said sector group to provide a parity entry therein which correctly matches the user data in the user data sectors of said sector group; said determining, verifying, and correcting steps being performed by said control processor when a host processor is performing operations which do not require the use of said control processor.

4. A method in accordance with claim 3, wherein, if data cannot be read from a data sector of a sector group, the parity entry for that sector group is identified as an invalid entry.

5. A method in accordance with claim 1, wherein, if the previous parity entry and the new parity entry do not match, the new parity entry for the corresponding data sectors in which new data has been written is entered.

6. Apparatus for handling data, for use in the method of claim 1 in a system having a control processor for controlling access to an array of data storage disks, wherein storage sectors of a selected number of said disks contain user data and storage sectors of a selected one of said disks contain redundant parity entries which match with the user data entries in the sectors corresponding thereto, corresponding user data and parity sectors in said disks forming identifiable sector groups, wherein said control processor includes a non-volatile, random access-memory (RAM), said apparatus comprising:
means for writing new user data into one or more selected sectors of said data storage disks, and for, when writing said user data, writing into said non-volatile RAM information identifying the array where said new user data is to be written, identifying the starting sector in said array into which new user data is to be written, and identifying the number of said one or more selected sectors into which said new user data is written; and
including means operable if a power failure occurs and comprising:
means for examining the information in the non-volatile RAM identifying data sectors into which new user data has been written;
means for determining a new parity entry for data in the corresponding data sectors into which new data has been written;
means for examining a previous parity entry which has been entered for data in the corresponding data sectors into which new data has been written, and
means for comparing the previous parity entry and the new parity entry, and means for correcting, if a mismatch occurs in a sector group, the parity entry in the parity sector of said sector group to provide a parity entry therein which correctly matches the user data in the user data sectors of said sector group.

## Patentansprüche

1. Ein Verfahren zur Datenbehandlung in einem System mit einem Steuerungsprozessor zur Steuerung des Zugangs zu einer Anordnung von Datenspeicherplatten, worin Speichersektoren einer ausgewählten Anzahl der Platten Benutzerdaten enthalten und Speichersektoren einer ausgewählten dieser Platten redundante Paritätseinträge enthalten, die zu den Benutzereinträgen in den dazugehörigen Sektoren passen, wobei entsprechende Benutzerdaten und Paritätssektoren in den Platten identifizierbare Sektorengruppen bilden, worin der Steuerungsprozessor einen nichtflüchtigen Schreib- und Lesespeicher (RAM) enthält, enthaltend die Schritte:
des Schreibens neuer Benutzerdaten in einen oder mehrere ausgewählte Sektoren der Datenspeicherplatten;
des Schreibens, wenn diese Benutzerdaten geschrieben werden, von Information in den nichtflüchtigen RAM, die die Anordnung, wohin die neuen Benutzerdaten geschrieben werden sollen, den Startsektor in der Anordnung, in welche neue Benutzerdaten geschrieben werden sollen, und die Anzahl des einen oder mehrerer ausgewählter Sektoren identifiziert, in welche die neuen Benutzerdaten geschrieben werden;
worin, wenn sich ein Stromausfall ereignet,
die Information in dem nichtflüchtigen RAM, die die Datensektoren identifiziert, in die neue Benutzerdaten geschrieben worden sind, untersucht wird;
ein neuer Paritätseintrag für Daten in den entsprechenden Datensektoren, in welche die neuen Daten geschrieben worden sind, bestimmt wird;
ein vorheriger Paritätseintrag untersucht wird, der für Daten in den entsprechenden Datensektoren, in die neue Daten geschrieben worden sind, eingegeben worden war, und
der vorherige Paritätseintrag und der neue Paritätseintrag verglichen werden und, wenn eine Nichtübereinstimmung in einer Sektorengruppe vorkommt, der Paritätseintrag in dem Paritätssektor dieser Sektorengruppe korrigiert wird, um darin einen Paritätseintrag zur Verfügung zu stellen, der korrekt zu den Benutzerdaten in den Benutzerdatensektoren dieser Sektorengruppe paßt.

2. Ein Verfahren gemäß Anspruch 1 und weiter enthaltend die Schritte:
des Bestimmens, ob der nichtflüchtige RAM irgendeine das Schreiben neuer Benutzerdaten in irgendwelche Sektoren der Platten betreffende Information enthält oder nicht; und,
wenn der nichtflüchtige RAM keine solche Information enthält, des Nachprüfens, ob der Paritätseintrag in dem Paritätssektor jeder Sektorengruppe zu den Benutzerdaten in den entsprechenden Benutzerdatensektoren der entsprechenden Sektorengruppe paßt.

3. Ein Verfahren gemäß Anspruch 2 und weiter enthaltend das Korrigieren des Paritätseintrages, wenn eine Nichtübereinstimmung in einer Sektorengruppe vorkommt, in dem Paritätssektor dieser Sektorengruppe, um darin einen Paritätseintrag zur Verfügung zu stellen, der korrekt zu den Benutzerdaten in den Benutzerdatensektoren dieser Sektorengruppe paßt; wobei das Bestimmen, das Nachprüfen und die Korrekturschritte von dem Steuerungsprozessor ausgeführt werden, wenn ein Hostprozessor Operationen durchführt, welche die Benutzung des Steuerungsprozessors nicht erfordern.

4. Ein Verfahren gemäß Anspruch 3, worin, wenn Daten aus einem Datensektor einer Sektorengruppe nicht gelesen werden können, der Paritätseintrag für diese Sektorengruppe als ein ungültiger Eintrag identifiziert wird.

5. Ein Verfahren gemäß Anspruch 1, worin, wenn der vorherige Paritätseintrag und der neue Paritätseintrag nicht übereinstimmen, der neue Paritätseintrag für die entsprechenden Datensektoren, in die neue Daten geschrieben worden sind, eingegeben wird.

6. Eine Vorrichtung zur Datenbehandlung, zur Anwendung in dem Verfahren gemäß Anspruch 1 in einem System mit einem Steuerungsprozessor zur Steuerung des Zugangs zu einer Anordnung von Datenspeicherplatten, worin Speichersektoren einer ausgewählten Anzahl der Platten Benutzerdaten enthalten und Speichersektoren einer ausgewählten dieser Platten redundante Paritätenseinträge enthalten, die zu den Benutzerdateneinträgen in den dazugehörigen Sektoren passen, wobei entsprechende Benutzerdaten und Paritätssektoren in den Platten identifizierbare Sektorengruppen bilden, worin der Steuerungsprozessor einen nichtflüchtigen Schreib- und Lesespeicher (RAM) enthält, enthaltend:
Mittel zum Schreiben neuer Benutzerdaten in einen oder mehrere ausgewählte Sektoren der Datenspeicherplatten und zum Schreiben, wenn diese Benutzerdaten geschrieben werden, von Information in den nichtflüchtigen RAM, die die Anordnung, wohin die neuen Benutzerdaten geschrieben werden sollen, den Startsektor in der Anordnung, in die neue Benutzerdaten geschrieben werden sollen, und die Anzahl des einen oder mehrerer ausgewählter Sektoren identifiziert, in welche die neuen Benutzerdaten geschrieben werden; und
enthaltend Mittel, die im Fall eines Stromausfalls betriebsfähig sind und enthalten:
Mittel zur Untersuchung der Information in dem nichtflüchtigen RAM, die Datensektoren identifiziert, in die neue Benutzerdaten geschrieben worden sind;
Mittel zum Bestimmen eines neuen Paritätseintrages für Daten in den entsprechenden Datensektoren, in die neue Daten geschrieben worden sind;
Mittel zum Untersuchen eines vorherigen Paritätseintrages, der für Daten in den entsprechenden Datensektoren, in die neue Daten geschrieben worden sind, eingegeben worden war, und
Mittel zum Vergleichen des vorherigen Paritätseintrages und des neuen Paritätseintrages und Mittel zum Korrigieren des Paritätseintrags, wenn eine Nichtübereinstimmung in einer Sektorengruppe vorkommt, in dem Paritätssektor dieser Sektorengruppe, um darin einen Paritätseintrag bereitzustellen, der korrekt zu den Benutzerdaten in den Benutzerdatensektoren dieser Sektorengruppe paßt.

## Revendications

1. Procédé pour manipuler des données dans un système comportant un processeur de commande pour commander l'accès à un réseau de disques de stockage de données, dans lequel des secteurs de stockage d'un certain nombre sélectionné desdits disques contiennent des données d'utilisateur et des secteurs de stockage d'un disque sélectionné desdits disques contiennent des entrées de parité redondantes correspondant aux entrées de données d'utilisateur dans les secteurs correspondants à celles-ci, les données d'utilisateur correspondantes et les secteurs de parité desdits disques formant des groupes de secteurs identifiables, dans lequel ledit processeur de commande comporte une mémoire non-volatile à accès aléatoire (RAM), ledit procédé comprenant les étapes consistant à :
■ écrire de nouvelles données d'utilisateur dans un ou plusieurs secteurs sélectionnés desdits disques de stockage de données ;
■ lors de l'écriture desdites données d'utilisateur, écrire dans ladite RAM non-volatile des informations identifiant le réseau où lesdites nouvelles données doivent être écrites, identifier le secteur de démarrage dans ledit réseau dans lequel de nouvelles données d'utilisateur doivent être écrites et identifier le nombre desdits un ou plusieurs secteurs sélectionnés dans lesquels lesdites nouvelles données d'utilisateur sont écrites ; et
■ dans lequel, si un défaut d'alimentation se produit,
■ examiner les informations situées dans la RAM non-volatile, identifiant des secteurs de données dans lesquels de nouvelles données d'utilisateur ont été écrites ;
■ déterminer une nouvelle entrée de parité pour des données dans les secteurs de données correspondants dans lesquels de nouvelles données ont été écrites ;
■ examiner une entrée de parité précédente ayant été entrée pour des données dans les secteurs de données correspondants dans lesquels de nouvelles données ont été écrites, et
■ comparer l'entrée de parité précédente et la nouvelle entrée de parité, et corriger, si une désadaptation apparaît dans un groupe de secteurs, l'entrée de parité dans le secteur de parité dudit groupe de secteurs pour fournir une entrée de parité dans celui-ci, correspondant de manière convenable aux données d'utilisateur dans les secteurs de données d'utilisateur dudit groupe de secteurs.

2. Procédé selon la revendication 1, et comportant en outre les étapes consistant à :
■ déterminer si ladite RAM non-volatile contient ou non des informations concernant l'écriture de nouvelles données d'utilisateur dans des secteurs quelconques desdits disques ; et
■ si ladite RAM non-volatile ne contient pas de telles informations, vérifier si l'entrée de parité dans le secteur de parité de chaque groupe de secteurs correspond aux données d'utilisateur des secteurs de données d'utilisateur correspondants du groupe de secteurs correspondant.

3. Procédé selon la revendication 2, et comportant en outre, si une désadaptation apparaît dans un groupe de secteurs, la correcion de l'entrée de parité dans le secteur de parité dudit groupe de secteurs pour fournir une entrée de parité dans celui-ci, qui correspond convenablement aux données d'utilisateur dans les secteurs de données d'utilisateur dudit groupe de secteurs ; lesdites étapes de détermination, vérification et correction, étant exécutées par ledit processeur de commande lorsqu'un processeur hôte effectue des opérations ne nécessitant pas l'utilisation dudit processeur de commande.

4. Procédé selon la revendication 3, dans lequel, si aucune donnée ne peut être lue dans un secteur de données d'un groupe de secteurs, l'entrée de parité pour ce groupe de secteurs est identifiée comme une entrée invalide.

5. Procédé selon la revendication 1, dans lequel, si l'entrée de parité précédente et la nouvelle entrée de parité ne correspondent pas, la nouvelle entrée de parité pour les secteurs de données correspondants dans lesquels de nouvelles données ont été écrites, est entrée.

6. Dispositif pour manipuler des données, destiné à être utilisé dans le procédé de la revendication 1, dans un système comportant un processeur de commande pour commander l'accès à un réseau de disques de stockage de données, dans lequel des secteurs de stockage d'un certain nombre sélectionné desdits disques contiennent des données d'utilisateur et des secteurs de stockage d'un disque sélectionné desdits disques contiennent des entrées de parité redondantes correspondant aux entrées de données utilisateur dans les secteurs correspondants à celles-ci, les données d'utilisateur correspondantes et les secteurs de parité desdits disques formant des groupes de secteurs identifiables, dans lequel ledit processeur de commande comporte une mémoire non-volatile accès aléatoire (RAM), ledit dispositif comprenant :
■ des moyens pour écrire de nouvelles données d'utilisateur dans un ou plusieurs secteurs sélectionnés desdits disques de stockage de données, et pour, lors de l'écriture desdites données d'utilisateur, écrire dans ladite RAM non-volatile des informations identifiant le réseau où lesdites nouvelles données doivent être écrites, identifier le secteur de démarrage dans ledit réseau dans lequel de nouvelles données d'utilisateur doivent être écrites et identifier le nombre desdits un ou plusieurs secteurs sélectionnés dans lequel lesdites nouvelles données d'utilisateur sont écrites ; et
comportant des moyens pouvant être actionnés si un défaut d'alimentation se produit, et comprenant :
■ des moyens pour examiner les informations situées dans la RAM non-volatile, identifiant des secteurs de données dans lesquels de nouvelles données d'utilisateur ont été écrites ;
■ des moyens pour déterminer une nouvelle entrée de parité pour des données dans les secteurs de données correspondants dans lesquels de nouvelles données ont été écrites ;
■ des moyens pour examiner une entrée de parité précédente ayant été entrées pour des données dans les secteurs de données correspondants dans lesquels de nouvelles données ont été écrites, et
■ des moyens pour comparer l'entrée de parité précédente et la nouvelle entrée de parité, et corriger, si une désadaptation apparaît dans un groupe de secteurs, l'entrée de parité dans le secteur de parité dudit groupe de secteurs pour fournir une entrée de parité dans celui-ci, correspondant de manière convenable aux données d'utilisateur dans les secteurs de données d'utilisateur dudit groupe de secteurs.
